# EUROPEAN PATENT SPECIFICATION

(11) **EP 2 818 864 B1**
(45) Date of publication and mention of the grant of the patent: **11.12.2019**
(21) Application number: 13174360.1
(22) Date of filing: 28.06.2013
(51) Int. Cl.: G01N 33/18, A01K 63/00, A01K 63/04

(54) **Remote assistance for aquarists**
Fernunterstützung für Aquaristen
Assistance à distance pour aquaristes

(43) Date of publication of application: 31.12.2014
(73) Proprietor: FUJITSU LIMITED, Kawasaki-shi, Kanagawa 211-8588 (JP)
(72) Inventor: Xiao, Hui, West Drayton, Middlesex UB7 7FW (GB)
(74) Representative: Haseltine Lake Kempner LLP

(56) References cited:
- EP-A1- 2 417 851
- CN-U- 201 805 508
- JP-A- H07 249 048
- JP-A- 2002 315 471
- JP-A- 2005 229 835
- US-A1- 2012 143 381

## Description

### Field of the Invention

Embodiments of the present invention relate to the provision of remote assistance to home aquarists and to other keepers of pet fish or other aquatic animals within aquaria and ponds.

### Background of the Invention

Fish keeping is a popular hobby. Although fish make great pets as they require less hands-on care than other animals, they still need some care. However, many people who buy fish to keep at home lack sufficient fish keeping skills, which can cause fish to suffer illness or early deaths. Moreover, it may not always be possible for fish keepers to provide adequate care to their fish owing to holidays and other absences.

The most important factor in successfully keeping fish is to match that fish to an appropriate environment. Different fish species require different living environments in terms of type of water (e.g. salt/fresh), quality of water (e.g. how clean the water is), temperature of water (e.g. cool/warm), oxygen amount in water, light level, etc. When their environment lacks something essential such as oxygen, or their environment has an excess of something intolerable such as fish waste, fish show signs of stress and disease.

There are many signs of stress and diseases that are recognizable by the movements and behaviours of fish. For example, a fish that is gasping at the surface of the water is usually suffering from a lack of oxygen; when fish lie at the bottom of an aquarium or pond and do not swim, it is usually a sign that they are exhausted; if a fish is not eating or takes food in its mouth and then immediately spits it out, it is showing the signs of stress and disease; if a fish stays hidden continuously and won't come out where it can be seen, the possible causes include the presence of aggressive fish, or insufficient cover (e.g., plants, wood, etc.) to make fish feel "safe" while swimming about.

With good and systematic maintenance, the fish's environment can be controlled and most fish problems can be proactively avoided. However, when fish start to show signs of stress and disease, it is better to treat fish promptly to prevent the illness from further developing to a more serious problem. Considering a typical home aquarium in the form of a water-filled tank, many treatments can be given to a fish through the medium of the tank water. For example, when a fish that is gasping at the surface of the water, a fish keeper might conventionally carry out the following actions: (a) check the water filter to be sure it's working properly; (b) check the temperature of the water on the thermometer, if the temperature is out of the correct range, then adjust the aquarium heater; (c) check the water surface and remove any oil or scum; (d) add aquarium salt, until the water has a total of 1 tablespoon of aquarium salt for each 20 litres of water. It will be apparent that these are conventionally manual tasks, requiring the attendance of the fish keeper.

Home aquariums are not necessarily confined to keeping fish; for example marine aquaria may be used to house invertebrates as well as or instead of, fish, or may predominantly house corals which are living animals though not mobile. Similar considerations apply to successfully keeping specimens healthy in such an environment. The term "aquarist" is used to denote a person keeping an aquarium for any purpose, typically for decorative purposes at home, and not necessarily, or not necessarily exclusively, fish-keeping. It further implies an amateur or non-expert rather than the "expert" referred to later with respect to embodiments of the present invention. Moreover, the term "fish-keeping" is to be understood as covering the use of ponds or other installations apart from aquaria.

The above mentioned lack of skills and/or absences pose an obstacle to the kinds of timely treatment as outlined above. Consequently, it would be desirable if there was some way of remotely advising aquarists and fish keepers on how to look after their fish/other aquatic animals, and ideally to automate at least some aspects of aquarium operation and maintenance.

EP 2417851 A1 discloses a remote assistance system in accordance with the preamble of each independent claim. The disclosed system is for regulating feeding of farmed fish and includes an automatic feeder, feed demand sensor, underwater light and environment sensor, all connected to a remote server. The server provides a user with an interface for setting a feeding schedule for the automatic feeder and referring to measurement values of the feed demand sensor and environment sensor. The user may also view images taken with an underwater camera.

US2012/0143381A1 discloses a system for controlling an aquatic habitat in which data from sensors is transmitted to a server and the server organizes and stores information related to the habitat. The server may determine that sensor data is outside set parameters, in which case the server sends commands to make a desired adjustment.

### Summary of the Invention

The invention is defined by the appended claims. Embodiments of the present invention may provide smart fish keeping solutions and services that can be used to remotely look after fish or other aquatic animals, below also referred to as "specimens", at home in real time even if the owner is away from home, based on the adoption of a "smart tank" and the concept of Internet of things (IoT). The smart tank continuously and autonomously monitors environmental conditions within a fish tank, and feeds gathered information to a remote server, which in return instructs some adjustment if needed. The same principle can be applied to management of a pond.

According to a first aspect of the present invention, there is provided a remote assistance system for use with an aquarium or pond including: a monitoring and control system installed in the aquarium or pond, comprising :a sensor module (including sensors for monitoring environmental conditions within the aquarium or pond, and at least one video camera for providing video images of one or more regions of the aquarium or pond; an information transmitting and receiving module for transmitting information gathered by the sensor module to a remote server, and receiving instructions; an action triggering module responsive to said instructions for actuating one or more automated control devices to alter the environmental conditions within the aquarium or pond; and a remote server arranged to analyse the information transmitted by the information transmitting and receiving module and provide said instructions to which the action triggering module is responsive; characterised in that the remote server is arranged to generate at least some of said instructions autonomously on the basis of analysis of the information transmitted by the information transmitting and receiving module, said analysis including analysing said video images to identify signs of stress or disease based on the behaviour of individual specimens.

Thus, the remote assistance system combines the monitoring and control system as defined above, installed for example in an aquarium to provide a "smart tank", with a remote server for analysing the information from the monitoring and control system, and for providing the instructions to the monitoring and control system (which instructions may be generated within the remote server and/or supplied to it by other parties).

In this remote assistance system, however, the service server is arranged to provide the instructions by generating at least some of the instructions autonomously, on the basis of analysis of the information transmitted by the information transmitting and receiving module.

Preferably, the sensor module includes sensors for any of water level, temperature, pH, hardness, ammonia, nitrates or nitrites. The sensor module preferably monitors these parameters continuously and autonomously without any need for human intervention, thereby generating the information to be transmitted by the information transmitting and receiving module, and can thus be left unattended.

In addition to transmitting this information, the information transmitting and receiving module also receives instructions intended for the action triggering module. These instructions may be made by various parties as explained later, and routed through a remote server defined below.

The video images are transmitted to the remote server, allowing an expert system at the remote server to identify conditions within the aquarium/pond, or conditions of individual specimens (e.g. fish), from analysis of the video images.

The action triggering module may include automated control devices for any of: water heating, lighting, filter pump, aeration pump, water changing, food dispensing, water additive dispensing, and medicament dispensing. In this way, corrective action can be taken by the monitoring and control system without the need for manual intervention.

The information transmitting and receiving module of the monitoring and control system, and the remote server, are preferably each connected to the Internet for transmitting and receiving the information and instructions. One way to achieve this, in the case of the monitoring and control system, is a wired or wireless link to a home broadband Internet connection.

The remote server may be accessible to a keeper of the aquarium or pond through a computing device of the keeper. Here, the term "keeper" refers to the owner of, or person responsible, for, the aquarium or pond, in other words a fish-keeper or aquarist. For example, the keeper may use a mobile device to access the remote server via the Internet, allowing him/her to check on the situation at any time even when away from home.

In this case, preferably, the server is arranged to provide data and/or analysis to the keeper based on the information transmitted by the information transmitting and receiving module, to receive a response from the keeper, and to provide at least some of the instructions taking the response into account. Thus, for example, if the keeper sees that one or more environmental conditions in the aquarium/pond have deteriorated, he/she may take action to prompt corrective action. This allows the keeper's personal knowledge to supplement the expertise of the expert system in the remote server.

To "provide" instructions here can include simply forwarding instructions from the keeper, or processing the corrective action ordered by the keeper into a form understood by the action triggering module. Thus, for example a higher-level instruction such as "raise oxygen level" from the keeper may be translated into a plurality of instructions for individual control devices under control of the action triggering module, such as turning on an aeration device, turning on a valve to introduce fresh water, and so forth.

Additionally, the server may be arranged to provide warning messages to the keeper relating to the environmental conditions within the aquarium or pond, and/or relating to behaviour of individual specimens within the aquarium or pond. "Specimens" here will typically be individual fish, but could also be other aquatic animals, corals and so on. In this way even a less-experienced fishkeeper, who might not appreciate the significance of certain parameter values, can be alerted to the existence of a problem.

In any remote assistance system as defined above, the remote server may be further accessible to a 3rd party expert through a computing device of the expert. "Expert" in this context means a person skilled in the practice of fish-keeping, setting-up or maintaining an aquarium or pond, or the like. In this case, preferably, the server is arranged to provide data and/or analysis to the expert based on the information transmitted by the information transmitting and receiving module, to receive a response from the 3rd party expert, and to generate at least some of the instructions taking the response into account. This arrangement permits a service level in which the care of the aquarium/pond and its inhabitants is at least partly in the hands of the 3rd party expert.

Also, in any remote assistance system as defined above, the server may analyse the video images for any one or more of the following purposes: determine lighting level in the aquarium or pond, and classify specimens present in the aquarium or pond.

According to a third aspect of the present invention, there is provided a method of providing remote assistance to a keeper of an aquarium or pond, comprising:
at the aquarium or pond, gathering information by continuously monitoring environmental conditions within the aquarium or pond and capturing video images of one or more regions of the aquarium or pond, and transmitting the gathered information to a remote server; at the remote server, analysing the gathered information and transmitting instructions back to the aquarium or pond; and using one or more automated control devices to alter environmental conditions within the aquarium or pond; characterised in that the remote server generates at least some of said instructions autonomously on the basis of analysis of the information transmitted by the information transmitting and receiving module, said analysis including analysing said video images to identify signs of stress or disease based on the behaviour of individual specimens.

Thus, embodiments of the present invention can provide an innovative/intelligent solution to facilitate the automatic fish (pet) keeping services. Embodiments include a system and a method wherein automatic sensor and video capture data is delivered to remote or local expert system that can process the data to automatically detect abnormal health of fish and the condition of fishes' living environment. It is mainly targeted towards small (household/ornamental) aquaria and to keeping of fish in such aquaria, but the present invention is also applicable to other small aquatic animals and to ponds.

Embodiments are based around an automated expert system which can detect abnormal conditions and provide advice and steps necessary to recover the situation. In one embodiment, source data sets (and automated analysis) can be sent to human experts, which enables the keeper (aquarist) to seek one-to-one professional/specialist tele-advice from fish specialists or vets to resolve specific problems.

By using the proposed remote monitoring expert system and automatic fish keeping services, the keeper can have an up-to-date understanding of what happens inside his/her aquarium and can ensure a healthy living environment and life for the inhabitants. In addition the proposed remote monitoring and alert services are especially useful when the keeper is away from home.

Although it would be possible to provide guidance to the keeper via a standalone application ("app") running on the keeper's smartphone or other mobile device, this approach is not preferred. Embodiments of the present invention employ a cloud-based server, preferably in conjunction with the keeper's mobile device or home computer as an access interface to the cloud-based server. This cloud-based server is advantageous compared with using a standalone application because: (a) although the keeper's mobile device can receive data from the fish tank when the keeper is connected with the network, it is not guaranteed that the keeper's mobile is always connected with the network, therefore the fish tank does not know when is the appropriate time to send the data to the keeper, but the cloud-based server is always available for receiving data; and (b) the cloud-based server has more intelligence in data analysing which could be gradually built up via analysis of many aquaria/ponds, or through the service provider's updates to the analytics engine.

The cloud-based server is able to store the video data when keeper/expert is not connected to the network, and to deliver the video data when the keeper/expert is connected to the network. The cloud-based data analytics is an additional feature of the server.

### Brief Description of the Drawings

Figure 1 illustrates a system architecture used by embodiments of the present invention;
Figure 2 illustrates functional blocks of a "smart" fish tank employed in embodiments of the present invention;
Figure 3 illustrates the operation of a cloud-based server employed in embodiments of the present invention;
Figure 4 shows examples of analysis conducted by the cloud-based server.

### Detailed Description

Embodiments of the present invention will now be described with reference to a home aquarium, of the kind typically used to keep freshwater tropical fish, as an example. As already mentioned however, the present invention is of broader application than this.

### System Architecture

In embodiments, remote assistance is provided to the aquarist (keeper) mainly based on any of the following three system architectures:-
* cloud-based automatic service architecture
* semi-automatic service architecture
* 3^{rd} party-based consultancy architecture

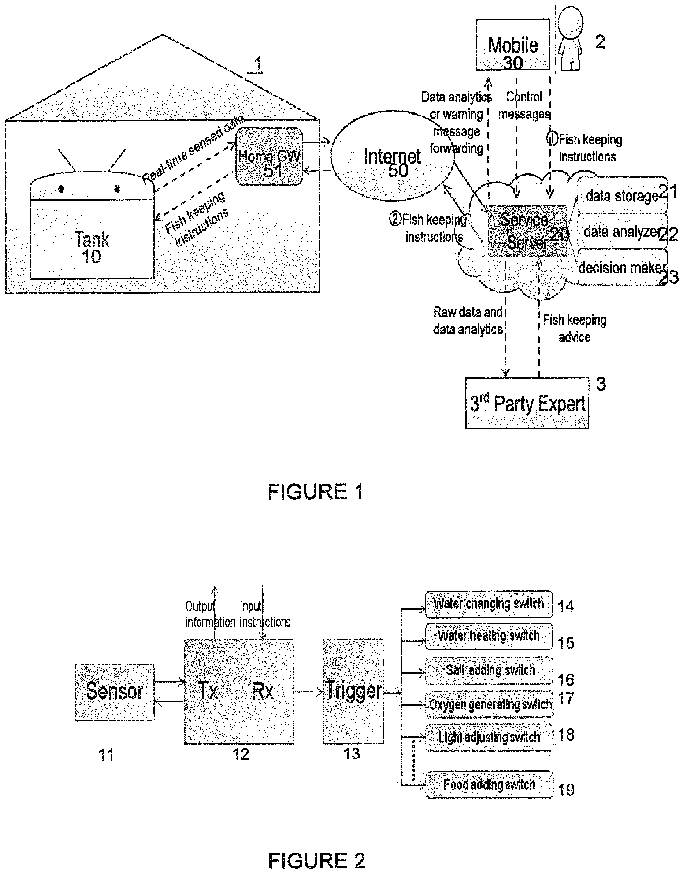

Figure 1 Illustrates these system architectures.

It is assumed that an aquarium in the form of at least one tank is located in an aquarist's home 1. The aquarist 2 himself/herself may be at home or at any other location such as at work, on holiday and so on, and has access to some kind of Internet-connected computing device, in this example, a mobile (smart phone) 30. The tank includes an autonomous monitoring and control system, thus providing a so-called "smart tank" 10 as will be explained in more detail later. It has the capability to exchange data with the Internet 50 via a home gateway 51, for example the aquarist's home broadband Internet router/cable modem.

A service server 20 (remote server) is connected to the Internet 50 and provides the "cloud-based server" referred to earlier, under the management of a service provider. Its main functions comprise data storage, data analysis and decision making as indicated in the Figure and explained in more detail below. Since the aquarist's mobile 30 is also connected with the Internet, this allows the aquarist 2 to access the service server 20.

Furthermore, in at least one architecture a 3rd party expert 3 (which need not be one person, but could be a team) is assumed to be present, who like the aquarist 2 is able to access the service server 20 by means of the Internet, via some kind of computing device (not shown).

Via the medium of the Internet, various kinds of data and control messages are exchanged among the smart tank 10, the service server 20, the aquarist's mobile device 30 and (if present) the 3rd party expert 3. These kinds of data/messages may include, depending on the architecture in use:
- Real-time sensed data from the smart tank 10 to the service server 20;
- Data analytics (in other words, results of analysis by the service server 20 upon the sensed data from the smart tank 10), sent from the service server 20 to the mobile 30, and possibly including specific warning messages;
- Raw data (such as the above real-time sensed data) and data analytics, sent from the smart tank 10 to the 3rd party expert 3;
- Fish keeping instructions (such as control adjustments to one or more automated devices of the smart tank 10, see below) sent by the aquarist via the mobile device 30 in response to the messages from the service server 20;
- Fish keeping advice from the 3rd party expert 3 to the service server 20;
- Fish-keeping instructions sent from the service server 20 to the smart tank 10 via the home gateway 51.

It should be understood that in Figure 1, the communications between the aquarist's mobile device 30 and the service server 20 are illustrative, which does not exclude the options of setting up the communications links between those two entities via the home gateway 51 and Internet 50, if the mobile device 30 is connected to the internet using a home area network. However, the fish-keeping instructions from the aquarist, denoted by the circled 1 in the Figure, will still be passed via the service server 20 to smart tank 10.

The common characteristics between the architectures are:
(i) A plurality of sensors used to capture the information about living environment of fish or movements and behaviours of fish are provided at (on or in) the smart tank 10. Preferably, as described below there are also one or more automated devices at the tank, capable of influencing conditions within the smart tank 10 in some way.
(ii) The real-time information sensed by the sensors is sent back via the home gateway 51 via the Internet 50, to the service server 20 that is remotely hosted in the cloud;
(iii) The real-time information is stored and processed at the service server 20 to produce analytics on the sensed data;
(iv) Based on the data analytics generated in (iii), instructions are generated and sent from service server 20, via the Internet 50 and home gateway 51, to the smart tank 10 to follow the instructions and take corresponding actions.

The main difference between the architectures is where the final fish keeping instructions are decided. In the case of automatic service structure, the final instructions (aforementioned in (iv)) are determined at the service server 20 based on the data analytics in (iii) and sent back to the smart tank 10 without any human involvement. One option is that if the treatment is too difficult to be given by the tank automatically, the service server can send a warning message to the mobile of aquarist to alert him/her the current situation of fish and the treatment required, so that the aquarist can give the fish proper treatment once he/she returns home. Thus, the configuration and dynamic control of environment parameters is provided by the server based on the fish species information using its own intelligence, and may not need any pre-configuration by the aquarist who may not have the expertise.

In the case of the semi-automatic service structure, the final instructions (in (iv)) are made at the aquarist using the aquarist's intelligence based on the data analytics in (iii) that is forwarded to the mobile of aquarist, and then the instructions are sent to the smart tank 10 through the service server 20, Internet 50 and home gateway 51. In this instance the service server "generates" the instructions by processing, or even simply forwarding, instructions from the aquarist. If the aquarist requires consulting with the 3^{rd} party expert for various kinds of fish keeping advice (illness diagnosis, treatments etc), the request can be sent to the 3^{rd} party expert 3 via the service server 20 to provide a one-to-one consultancy service. Upon the consultancy request of the aquarist, the relevant data stored at the service server including the raw data and data analytics is made available to the expert advisor, on the basis of which the expert advisor can provide professional fish keeping advices to the aquarist. In this way, the service server 20 serves as a platform to link the service requests of customers with consultancy services of experts.

The above service modes can be interchanged. One example of realizing this is that the mobile of aquarist has the control capability of switching the service mode by sending a switching command to the service server. Other control capabilities that a aquarist may have include presetting key performance indicators (KPIs) for the subscribed fish keeping services, which can be realized for example by sending a control message to the service server or by logging in to the service provider's webpage and configuring the KPIs online. The possible KPIs are keeping at least % of fish without illness, keeping all fish without illness for at least certain number of days, keeping specific fish species without illness. The KPIs provide a way of evaluating the quality of services (environment maintenance, disease treatment) provided by the service provider, i.e. how successful the maintenance or treatment service is.

The smart tank 10 will now be described more fully with respect to Figure 2, showing functional modules thereof. As will be apparent, Figure 2 does not show an actual tank but rather, the modules (electronic/electrical, electro-chemical and electro-mechanical) which make a conventional fish tank into a "smart" tank. In other words, the modules shown in Figure 2 can be regarded as a monitoring and control system for an otherwise-conventional aquarium.

As shown in Figure 2, the smart tank 10 includes a sensor module 11 incorporating one or preferably several sensors (see below); an information transmitting and receiving module 12 for transmitting and information gathered by the sensor module, and receiving instructions via the home gateway 51. Connected to the transmitting and receiving module 12 is an action triggering module 13 for actuating one or more automated control devices. These can be of various kinds as explained below. The Figure shows, by way of example, a water changing switch 14, water heating switch 15, salt adding switch 16, oxygen generating switch 17, light adjusting switch 18, and food adding switch 19.

These modules of the smart tank 10 can be described in more detail as follows.

Referring again to the sensor module 11, two types of sensors are necessary for delivering the proposed services, which are living environment & supply related sensors, and at least one video recording camera. The former type serves the purposes of detecting the water quality, including pH and hardness, oxygen level, levels of ammonia and nitrates/nitrites, levels of other contaminants or of additives such as aquarium salt, water temperature and level (height in the tank), light intensity (including both ambient and in-built light sources), food storage level in an automated food dispenser, and so on. Other sensors, depending on the equipment present in the tank, may monitor the status of pumps and/or powered filters. As a variation of light intensity sensing, detecting the level and/or colour of ambient light entering the tank from outside can provide an indication of algal growth.

The video camera is used for monitoring and recording the movements and behaviours of fish, plant (vegetation) amount etc. If one camera is not able to cover the whole fish tank region, then one possible solution is to place multiple cameras at different locations of the smart tank 10 with the purpose of visualizing the whole fish tank region. A video camera floating on, or submerged within, the aquarium water may be capable of roving within the tank in the manner of a toy boat or submarine, to obtain a good view of all regions. Alternatively, one or more video cameras could be arranged to crawl on the outside walls of the smart tank 10.

In this manner, the sensor unit 11 gathers two types of information, namely environment & supply related information and movement & behaviour related information. These two types of sensed information are captured by the living environment & supply related sensors and the video camera(s) respectively. All this information is transmitted via the transceiver unit 12 using some communications method known in the art (such as a WiFi connection to a home router providing gateway 51, in turn connected to the Internet 50) and thus communicated to the service server 20.

As an example of one possible implementation of the sensor unit 11, there is the Seneye™ device manufactured by Seneye Ltd. This includes sensors to monitor the change in a number of water parameters that are undetectable to human eye, such as temperature, pH, NH3, water level, etc., as well as a simple camera for detecting light levels and colour temperature. Such a device could be employed as the sensor 11 (and transceiver unit 12) of the smart tank 10 in Figure 2. More preferable however (in terms of visual impact on the smart tank 10) would be a single integrated unit for the whole monitoring and control system, in other words for all of the components shown in Figure 2.

Information transmitting and receiving module 12: This module consists of two functionality entities that are "transmitter" (Tx) and "receiver" (Rx) respectively. The Tx entity is in charge of receiving sensed information from the sensor entity and transmitting it to the home gateway, which is further directed to the service server through Internet. This sensed information includes both parameter values obtained by individual sensors, and raw video images (perhaps in time lapse or compressed form) from the video camera. The Rx entity takes charge of receiving instructions sent through the home gateway and forwarding those to the action triggering module.

Action triggering module 13: This module refers to the "trigger" entity shown in Figure 2, which is in charge of processing the instructions sent from the Rx entity and triggering required actions to be taken at the relevant controllers 14 - 19 of the electronic or mechanical devices as exemplified in Figure 2.

To explain the water changing switch 14 more fully, it is possible for an aquarium/pond to be connected to a water supply and drain ("plumbed-in") allowing water changes to be performed without laborious use of siphons and the like. Such a plumbed-in aquarium/pond is advantageously used with the present invention since, by providing electro-mechanical valves for the water input/output, it becomes possible to automate the water changing process. Water changing is a key remedial measure for diluting pollutants.

The water heating switch 15 and light adjusting switch 18 in Figure 2 will be self-explanatory. The salt adding switch 16 refers to an automated dispenser for aquarium salt, this being a commonly-used palliative for fish (even freshwater fish) showing signs of stress.

The oxygen generating switch 17 will typically control an aeration device which bubbles ambient air through the water to raise the oxygen level. The food adding switch 19 is likewise linked to an automated dispenser, of the kind conventionally used by aquarists while on holiday. Although not shown in Figure 2, an automated medicament dispenser is another possibility. To prevent the contents of such dispensers from being affected by moisture, aeration lines may be used to keep them dry.

A further switch which may be controlled by the triggering module 13, is a switch for a motor or pump. Filtration can be increased to break down ammonia more quickly should the ammonia level become too high, for example.

Various levels of sophistication the smart tank 10 are possible. A complex model may have a wide range of actuators/switches, allowing a wide range of actions to be performed automatically so that the smart tank 10 can be left unattended for long periods. A simpler model may have fewer actuators/switches so that only certain actions can be performed automatically, with other actions left to be performed by the keeper when he/she returns home. For example, unless the tank is plumbed in as mentioned above, water changing will normally require the keeper's presence.

### Service Server

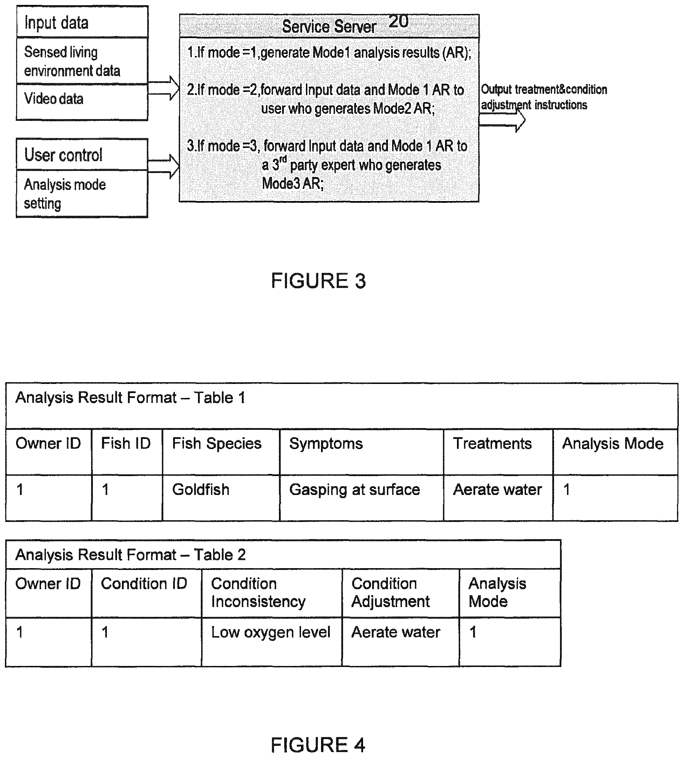

The service server 20 of Figure 1 will now be described further with reference to Figures 1 and 3.

As shown in Figure 1, there are three main functional components incorporated in the service server, which are the data storage module 21, data analysis module 22 and decision making module 23. The data storage module 21 is used to store information on KPI configurations, raw data used for analysis, results of data analytics, final decisions on instructions and so forth. The data analysis module 22 is used to process and examine the raw data with the purposes of drawing conclusions on that information. The decision making module 23 is used to draw conclusions on recommended treatments to fish, or to decide whether to send a warning message to the aquarist's mobile device 30. Additionally, the service server 20 can have a visualization service module, which is used to enable the aquarist to visualize the real-time situation of the smart tank 10 and fish, and the performance of the fish keeping services.

### Remote Assistance Services

Figure 3 shows operations at the service server 20. Depending on the architecture used, various modes of operation can be implemented by a remote assistance system embodying the present invention, as shown in the Figure.

Mode 1 is a mode of operation in which the service server 20 itself performs the analysis on the raw data from the sensor(s) at the smart tank 10.

Mode 2 is a mode in which the service server 20 forwards the raw data and its own analysis to the aquarist for further consideration.

Mode 3 is like Mode 2 except that the raw data and Mode 1 analysis results are supplied to the 3rd party expert 3, allowing the expert to draw conclusions on the steps to be taken.

Figure 4 shows two simple examples of how the service server 20 can generate analysis results in Mode 1.

In the first example (Table 1), the service server 20 considers fish species information (either supplied by the aquarist or inferred from the video data) and observed symptoms of an individual fish (inferred from the video data, see below). From these items of data the service server 20 concludes that aeration of the water is needed. Depending on the architecture in use, the service server 20 may automatically instruct operation of the oxygen-generating switch 17, so that an aeration device (such as an airstone operated by a motor-driven pump) increases aeration within the smart tank 10.

In the second example (Table 2), the service server 20 analyses sensor readings applying to the smart tank 10 in general, rather than an individual fish. Noting that a low oxygen level has been detected, the service server 20 again concludes that aeration is required so as to help fish breathe normally, and so sends an instruction to cause the triggering module to actuate the oxygen-generating switch (or if available, the water-changing switch).

The above Modes can be combined and packaged to provide various levels of service to the aquarist. For example, a Type 1 service may be defined as a living environment maintenance service and a Type 2 service as a disease treatment service.

There is nothing more important than maintaining a proper living environment (temperature, water quality, aeration etc.) for fish. For example, tropical fish and goldfish require different temperature water, goldfish do well in cool water, whereas tropical fish must have warm with a typical temperature range between 25-27 degrees C. Type 1 services can avoid fish problems developing and in this sense, can be considered as preventive treatment to fish diseases.

In one example of Type 1 service, the species information is provided by the aquarist via the mobile device 30. Alternatively, it may be possible for the service server (possibly with assistance from the 3^{rd} party expert) to infer which species are present by analysing the video data that is sent from the camera set up at the tank to the service server with video data analysis tool incorporated.

Another embodiment of Type 1 service is that, the service server provides regular checking and maintenance for the living conditions of fish. The sensed information on the living conditions & supply is sent back to the service provider or the mobile equipment of aquarist. The service server or aquarist then compares the real-time conditions with the requirements of specific fish species, and if there is any inconsistency between the real-time conditions and the requirements, then corresponding instructions are sent to the smart tank 10 to take adjustment actions.

Type 2 services are to provide prompt treatment to fish diseases when signs of stress and diseases are detected at the service server, or to send warning messages and recommended treatments to the aquarist if it is not possible to give the required treatment by the smart tank 10 to the ill fish.

One embodiment of Type 2 services is that the movements and behaviours are monitored and recorded by the camera set up at the tank, the real-time video data is sent back to the service server where the raw data is processed using video analysis software to identify individual fishes and their associated information on behaviours and movements, the information on behaviours and movements related to individual fishes are either used at the service server or further forwarded to aquarist to identify whether there are any signs of stress and diseases for each fish, based on which recommendations on treatments are made and instructions to the smart tank 10 are given. Such analysis is not straightforward but is similar in principle to video surveillance technology already in existence for monitoring people for security purposes. A 3^{rd} party expert could assist with such analysis if required.

If an automatic treatment is not possible to be given, perhaps because the required medicament is not available to be dispensed automatically, the aquarist should receive warning message on his/her mobile equipment which indicates the severity of illness and recommended treatments, so that the aquarist is able to give remedy to specific fish as soon as he/she returns home.

Another embodiment of Type 2 service is that, after the sensed data are received and analysed at the service server, if the service server identifies that there are signs of stress and diseases for one or more fish, it alerts the fish keeper (who does not have to be away from home) to the problems that are detected by sending a warning message or marking up the detected problems on the fish keeper's service account. With permission given by the fish keeper, the information regarding the ill fish including not only the living environment data, but also the video data and data analytics is further directed to an Internet-based fish keeping advisor board by the service server; thus professional opinions on diagnosis and treatment of illness can be given by experts to the aquarist to provide a remote one-to-one consultancy service.

To identify and track fish, a number of video analysis software solutions are available. For example, EthoVision XT™ is the premier video tracking software for the automatic tracking and analysis of animal movement, activity, and behaviour; SwisTrack™ is a powerful tool for tracking robots, humans, animals and objects using a camera or a recorded video as input source.

One example of identifying fish illness and providing recommendations on treatment is that, as already mentioned, a fish that is gasping at the surface of the water is usually suffering from a lack of oxygen. Another example of identifying fish illness and providing recommended treatment is that when a fish clamps its fins close against its body, the following treatment is appropriate according to experienced aquarists' recommendations: a. change 20% of the water in the tank; b. add Quick Cure, the recommended dosage is 1 drop of Quick Cure™ for each 5 litres of aquarium water; c. add Aquarium Salt in the recommended dosage such as one tablespoon of Aquarium Salt per 25 litres of aquarium water; d. increase the water temperature: if the fish you're treating are in a warm water aquarium with an aquarium heater, increase the temperature of the water to a maximum of 28 degrees C.

As already mentioned, if the aquarium is suitably equipped, at least some of the above actions can be performed automatically. For tanks plumbed-in to a water supply and drainage, by activating valves automatically by means of solenoids and the like, it is possible for the server and/or aquarist to remotely command a water change. Likewise, automated dispensers can be used to add a substance such as a medicament or aquarium salt, preferably in small amounts (such as one drop) at a time so that the substance's level in the tank can be monitored. As one example, the level of a concentrated medicament such as methylene blue can be assessed from the video data reaching the service server.

By collecting symptoms and reactions to treatments prescribed by the server for a variety of fish kept by different people, the intelligence of service server can also be gradually built up to a more sophisticated level.

### Operation from Perspective of the Aquarist

Practical usage of the smart tank 10 and service server 20 may proceed as follows.

Access to the service server 20 may be bundled with the selling of a smart tank 10. Once a customer purchases a smart tank 10, he/she is registered with the service provider and assigned with a username and password to log in to the service provider's webpage to obtain different categories of services, among which are free and charged services. For example, based on the service types discussed earlier, four categories of services may be made available, namely information services, basic fish keeping services, premium fish keeping services and web store services.

Information services refer to the general guidance/useful tips provided to a aquarist on how to properly maintain the group of fish that bought by the aquarist. This service enables the professional guidance/tips in the light of the fish species to be presented to a aquarist with least Internet searching effort for acquiring the relevant information.

Basic fish keeping services includes all the closed-loop automated services provided by the service server using the intelligence of its own without any human involvement. To be specific, the initial proper configurations of living environment, the regular checking and maintenance of living conditions and the diagnosis and treatment of fish illness by service server are all counted as basic services.

Premium fish keeping services refer to the human-involved one-to-one consultancy services provided to an aquarist by comprehensively using the capabilities of service server in terms of sensed data gathering & processing, signs of problem detecting etc, and the intelligence of expert advisor who is allowed to access, review and analyse all the relevant data upon the consultancy request of the aquarist. In this case, the service provider serves as a platform to link the service requests of customers with consultancy services of experts, and plays the role of information storage, information analysis, and information delivery.

Web store services refer to the cloud-based service provider using its website to host the commercial information/advertisements posted by different fish selling, fish equipment, supply or consultancy companies with the purpose of creating business opportunities for various commercial bodies or individuals; for example the information and basic services may be provided to customers for free, but the premium and web store type of services can be provided with different levels of charges depending on the services being used.

The fish keeping services can be provided by a solution company that sells smart tanks to retail shops and which hosts and sells associated services to customers, and the smart tanks can be produced by many different manufacturers. Alternatively, the services can be provided by different fish tank manufacturers; customers when purchasing fish tanks from retail shops are charged by different manufacturers for using their services.

Existing tanks can be "retrofitted" as smart tanks by addition of the monitoring and control system shown in Figure 2. This may be conveniently be housed in a lid of the tank so as to minimise the visual impact upon the appearance of the tank, and facilitate access by the aquarist for example to replenish dispensable substances such as food. Still more convenient is an arrangement in which not only the monitoring and control system, but also the other standard aquarium equipment such as heater, filter and so on, are provided as one integrated unit. Of course, it may still be necessary for individual components (such as the video camera) to be separate and connected by wires or air lines.

Various modifications are possible within the scope of the present invention.

Although the above description has focussed on an indoor freshwater fish aquarium, this is not essential, and the present invention may also be applied to saltwater (marine) aquaria, including invertebrate-only tanks, and to outdoor installations such as ponds. Incidentally, the skilled reader will understand that although aquaria are generally classified into freshwater (cold water or tropical) and marine, these labels are only for convenience; some fish species require brackish water for example.

The present invention is applicable not only to existing aquaria, but is also preferably utilised at the planning/setup stage of an aquarium. For example, before adding fish (or corals, etc) to an aquarium, it is important to ensure that the water conditions have stabilised and are suited to the fish types to be added. As one example, some species will only tolerate a relatively narrow pH range or amount of hardness. Most fish are intolerant of chlorine, which is routinely added to domestic water supplies, and must be allowed to disperse before adding the fish. Thus, one example of Type 1 services is that, the service server provides initial configurations of the living environment for a group of fish based on their species information that is provided by the mobile equipment of aquarist to the service server through the service provider's webpage.

Planting of an aquarium (that is, the siting of plants to provide a suitable habitat for the fish) is another important aspect of setting up an aquarium. However, aquarium plants, just like garden plants, have requirements in terms of light level. With the lighting activated, the sensor module 11 of the smart tank 10 can detect the light levels at various parts of the tank, allowing the service server 20 to make recommendations for suitable plants and locations for the plants.

## Claims

1. A remote assistance system for use with an aquarium or pond comprising:
a monitoring and control system (10) installed in the aquarium or pond, comprising:
a sensor module (11) including sensors for monitoring environmental conditions within the aquarium or pond, and at least one video camera for providing video images of specimens in one or more regions of the aquarium or pond;
an information transmitting and receiving module (12) for transmitting information gathered by the sensor module to a remote server (20), and receiving instructions;
an action triggering module (13) responsive to said instructions for actuating one or more automated control devices to alter the environmental conditions within the aquarium or pond; and
a remote server (20) arranged to analyse the information transmitted by the information transmitting and receiving module (12) and provide said instructions to which the action triggering module (13) is responsive; **characterised in that**
the remote server is arranged to generate at least some of said instructions autonomously on the basis of analysis of the information transmitted by the information transmitting and receiving module (12), said analysis including analysing said video images to identify signs of stress or disease based on the behaviour of individual specimens.

2. The remote assistance system according to claim 1 wherein the sensor module (11) includes sensors for any of water level, temperature, pH, hardness, ammonia, nitrates or nitrites.

3. The remote assistance system according to claim 1 or 2 wherein the information transmitting and receiving module (12) is arranged to transmit the video images to the remote server (20).

4. The remote assistance system according to claim 1, 2 or 3 wherein the action triggering module (13) includes automated control devices for any of: water heating, lighting, filter pump, aeration pump, water changing, food dispensing, water additive dispensing, and medicament dispensing.

5. The remote assistance system according to any preceding claim wherein the information transmitting and receiving module (12) of the monitoring and control system (10), and the remote server (20), are each connected to the Internet for transmitting and receiving said information and instructions.

6. The remote assistance system according to any preceding claim wherein the remote server is accessible to a keeper (2) of the aquarium or pond through a computing device (30) of the keeper.

7. The remote assistance system according to claim 6 wherein the server is arranged to provide data and/or analysis to the keeper (2) based on the information transmitted by the information transmitting and receiving module (12), to receive a response from the keeper (2), and to generate at least some of said instructions taking said response into account.

8. The remote assistance system according to claim 6 or 7 wherein the server is arranged to provide warning messages to the keeper relating to the environmental conditions within the aquarium or pond, and/or relating to behaviour of individual specimens within the aquarium or pond.

9. The remote assistance system according to any preceding claim wherein the remote server is accessible to a 3rd party expert (3) through a computing device of the expert.

10. The remote assistance system according to claim 9 wherein the server is arranged to provide data and/or analysis to the expert (3) based on the information transmitted by the information transmitting and receiving module (12), to receive a response from the 3rd party expert (3), and to generate at least some of said instructions taking said response into account.

11. The remote assistance system according to any preceding claim wherein the analysis further includes analysing said video images for any one or more of the following purposes: determine lighting level in the aquarium or pond, and classify specimens present in the aquarium or pond.

12. A method of providing remote assistance to a keeper (2) of an aquarium or pond, comprising:
at the aquarium or pond, gathering information by continuously monitoring environmental conditions within the aquarium or pond and capturing video images of specimens in one or more regions of the aquarium or pond, and transmitting the gathered information to a remote server;
at the remote server, analysing the gathered information and transmitting instructions back to the aquarium or pond; and
using one or more automated control devices to alter environmental conditions within the aquarium or pond; **characterised in that**
the remote server generates at least some of said instructions autonomously on the basis of analysis of the information transmitted by the information transmitting and receiving module (12), said analysis including analysing said video images to identify signs of stress or disease based on the behaviour of individual specimens.

## Patentansprüche

1. Fernunterstützungssystem zur Verwendung mit einem Aquarium oder Teich, umfassend:
ein Überwachungs- und Steuersystem (10), das in dem Aquarium oder Teich installiert ist, umfassend:
ein Sensormodul (11), das Sensoren zum Überwachen der Umgebungsbedingungen innerhalb des Aquariums oder Teichs aufweist, und mindestens eine Videokamera zum Bereitstellen von Videobildern von Spezimen in einer oder mehreren Regionen des Aquariums oder Teichs;
ein Informationssende- und -empfangsmodul (12) zum Senden von durch das Sensormodul gesammelten Informationen an einen entfernten Server (20), und Empfangen von Anweisungen;
ein Aktionsauslösemodul (13), das auf die Anweisungen anspricht, zum Betätigen einer oder mehrerer automatisierter Steuervorrichtungen, um die Umgebungsbedingungen innerhalb des Aquariums oder Teichs zu ändern; und
einen entfernten Server (20), der eingerichtet ist, die von dem Informationssende- und -empfangsmodul (12) gesendeten Informationen zu analysieren und die Anweisungen, auf die das Aktionsauslösemodul (13) anspricht, bereitzustellen; **dadurch gekennzeichnet, dass** der entfernte Server eingerichtet ist, mindestens einige der Anweisungen basierend auf einer Analyse durch das Informationssende- und -empfangsmodul (12) gesendeten Informationen autonom zu erzeugen, wobei die Analyse Analysieren der Videobilder, Anzeichen von Stress oder Krankheit basierend auf dem Verhalten einzelner Spezimen zu identifizieren, aufweist.

2. Fernunterstützungssystem nach Anspruch 1, wobei das Sensormodul (11) Sensoren für eines von Wasserstand, Temperatur, pH-Wert, Härte, Ammoniak, Nitrate oder Nitrite aufweist.

3. Fernunterstützungssystem nach Anspruch 1 oder 2, wobei das Informationssende- und -empfangsmodul (12) eingerichtet ist, Videobilder an den entfernten Server (20) zu senden.

4. Fernunterstützungssystem nach Anspruch 1, 2 oder 3, wobei das Aktionsauslösemodul (13) automatisierte Steuervorrichtungen aufweist für eines von: Wasserheizung, Beleuchtung, Filterpumpe, Belüftungspumpe, Wasserwechsel, Futterausgabe, Wasseradditivausgabe und Medikamentenausgabe.

5. Fernunterstützungssystem nach einem der vorhergehenden Ansprüche, wobei das Informationssende- und -empfangsmodul (12) des Überwachungs- und Steuersystems (10) und der entfernte Server (20) jeweils mit dem Internet verbunden sind, zum Senden und Empfangen der Informationen und Anweisungen.

6. Fernunterstützungssystem nach einem der vorhergehenden Ansprüche, wobei der entfernte Server für einen Halter (2) des Aquariums oder Teichs über eine Computervorrichtung (30) des Halters zugänglich ist.

7. Fernunterstützungssystem nach Anspruch 6, wobei der Server eingerichtet ist, dem Halter (2) basierend auf den durch das Informationssende- und -empfangsmodul (12) gesendeten Informationen Daten und/oder Analysen bereitzustellen, um eine Antwort von dem Halter (2) zu empfangen, und um mindestens einige der Anweisungen unter Berücksichtigung der Antwort zu erzeugen.

8. Fernunterstützungssystem nach Anspruch 6 oder 7, wobei der Server eingerichtet ist, dem Halter Warnmeldungen bezüglich der Umgebungsbedingungen innerhalb des Aquariums oder Teichs und/oder bezüglich eines Verhaltens einzelner Spezimen innerhalb des Aquariums oder Teichs bereitzustellen.

9. Fernunterstützungssystem nach einem der vorhergehenden Ansprüche, wobei der entfernte Server für einen Experten (3) eines Drittanbieters über eine Computervorrichtung des Experten zugänglich ist.

10. Fernunterstützungssystem nach Anspruch 9, wobei der Server eingerichtet ist, dem Experten (3) basierend auf den durch das Informationssende- und -empfangsmodul (12) gesendeten Informationen Daten und/oder Analysen bereitzustellen, um eine Antwort von dem Experten (3) eines Drittanbieters zu empfangen, und um mindestens einige der Anweisungen unter Berücksichtigung der Antwort zu erzeugen.

11. Fernunterstützungssystem nach einem der vorhergehenden Ansprüche, wobei die Analyse ferner Analysieren der Videobilder für einen oder mehrere der folgenden Zwecke aufweist: Bestimmen eines Beleuchtungsniveaus in dem Aquarium oder Teich, und Klassifizieren von Spezimen in dem Aquarium oder Teich.

12. Verfahren zur Bereitstellung einer Fernunterstützung für einen Halter (2) eines Aquariums oder Teichs, umfassend:
am Aquarium oder Teich, Sammeln von Informationen durch kontinuierliches Überwachen von Umgebungsbedingungen in dem Aquarium oder Teich und Aufnehmen von Videobildern von Spezimen in einer oder mehreren Regionen des Aquariums oder Teichs, und Senden der gesammelten Informationen an einen entfernten Server;
am entfernten Server, Analysieren der gesammelten Informationen, und Senden von Anweisungen zurück an das Aquarium oder den Teich; und
Verwendung einer oder mehrerer automatisierter Steuervorrichtungen zum Ändern von Umgebungsbedingungen innerhalb des Aquariums oder Teichs; **dadurch gekennzeichnet, dass** der entfernte Server basierend auf einer Analyse der durch das Informationssende- und -empfangsmodul (12) gesendeten Informationen mindestens einige der Anweisungen autonom erzeugt, wobei die Analyse Analysieren der Videobilder, um Anzeichen von Stress oder Krankheit basierend auf dem Verhalten einzelner Spezimen zu identifizieren, aufweist.

## Revendications

1. Système d'assistance à distance à utiliser avec un aquarium ou un bassin comprenant :
un système de surveillance et de commande (10) installé dans l'aquarium ou le bassin, comprenant :
un module de capteur (11) comprenant des capteurs pour surveiller des conditions environnementales dans l'aquarium ou le bassin, et au moins une caméra vidéo pour fournir des images vidéo de spécimens dans une ou plusieurs régions de l'aquarium ou du bassin ;
un module de transmission et de réception d'informations (12) pour transmettre des informations recueillies par le module de capteur à un serveur distant (20) et recevoir des instructions ;
un module de déclenchement d'action (13) sensible auxdites instructions pour actionner un ou plusieurs dispositifs de commande automatisés afin de modifier les conditions environnementales dans l'aquarium ou le bassin ; et
un serveur distant (20) agencé pour analyser les informations transmises par le module de transmission et de réception d'informations (12) et fournir lesdites instructions auxquelles le module de déclenchement d'action (13) est sensible ; **caractérisé en ce que**
le serveur distant est agencé pour générer de manière autonome au moins certaines desdites instructions sur la base d'une analyse des informations transmises par le module de transmission et de réception d'informations (12), ladite analyse comprenant l'analyse desdites images vidéo pour identifier des signes de stress ou maladie sur la base du comportement de spécimens individuels.

2. Système d'assistance à distance selon la revendication 1, dans lequel le module de capteur (11) comprend des capteurs pour un quelconque parmi le niveau d'eau, la température, le pH, la dureté, l'ammoniac, les nitrates ou les nitrites.

3. Système d'assistance à distance selon la revendication 1 ou 2, dans lequel le module de transmission et de réception d'informations (12) est conçu pour transmettre les images vidéo au serveur distant (20).

4. Système d'assistance à distance selon la revendication 1, 2 ou 3, dans lequel le module de déclenchement d'action (13) comprend des dispositifs de commande automatisés pour : chauffage de l'eau, éclairage, pompe à filtre, pompe d'aération, changement d'eau, distribution de nourriture, distribution d'additifs à l'eau, et distribution de médicaments.

5. Système d'assistance à distance selon l'une quelconque des revendications précédentes, dans lequel le module de transmission et de réception d'informations (12) du système de surveillance et de commande (10) et le serveur distant (20) sont connectés chacun à l'Internet pour la transmission et la réception desdites informations et instructions.

6. Système d'assistance à distance selon l'une quelconque des revendications précédentes, dans lequel le serveur distant est accessible à un détenteur (2) de l'aquarium ou du bassin par le biais d'un dispositif informatique (30) du détenteur.

7. Système d'assistance à distance selon la revendication 6, dans lequel le serveur est conçu pour fournir des données et/ou une analyse au détenteur (2) sur la base des informations transmises par le module de transmission et de réception d'informations (12), pour recevoir une réponse du détenteur (2), et générer au moins certaines desdites instructions en prenant en compte ladite réponse.

8. Système d'assistance à distance selon la revendication 6 ou 7, dans lequel le serveur est agencé pour fournir au détenteur des messages d'avertissement concernant les conditions environnementales dans l'aquarium ou le bassin et/ou concernant le comportement de spécimens individuels dans l'aquarium ou le bassin.

9. Système d'assistance à distance selon l'une quelconque des revendications précédentes, dans lequel le serveur distant est accessible à un expert tiers (3) via un dispositif informatique de l'expert.

10. Système d'assistance à distance selon la revendication 9, dans lequel le serveur est conçu pour fournir des données et/ou une analyse à l'expert (3) sur la base des informations transmises par le module de transmission et de réception d'informations (12), pour recevoir une réponse de l'expert tiers (3), et générer au moins certaines desdites instructions en prenant en compte ladite réponse.

11. Système d'assistance à distance selon l'une quelconque des revendications précédentes, dans lequel l'analyse comprend en outre l'analyse desdites images vidéo pour un ou plusieurs des objectifs suivants : déterminer le niveau d'éclairage dans l'aquarium ou le bassin, et classer les spécimens présents dans l'aquarium ou le bassin.

12. Procédé d'assistance à distance à un détenteur (2) d'un aquarium ou d'un bassin, comprenant les étapes consistant à :
dans l'aquarium ou le bassin, collecter des informations en surveillant de manière continue des conditions environnementales dans l'aquarium ou le bassin et en capturant des images vidéo de spécimens dans une ou plusieurs régions de l'aquarium ou du bassin, et transmettre les informations collectées à un serveur distant ;
au niveau du serveur distant, analyser les informations collectées et retransmet les instructions à l'aquarium ou au bassin ; et
utiliser un ou plusieurs dispositifs de commande automatisés pour modifier des conditions environnementales dans l'aquarium ou le bassin ; **caractérisé en ce que**
le serveur distant génère au moins certaines desdites instructions de manière autonome sur la base d'une analyse des informations transmises par le module de transmission et de réception d'informations (12), ladite analyse comprenant l'analyse desdites images vidéo pour identifier des signes de stress ou de maladie sur la base du comportement de spécimens individuels.
